# EUROPEAN PATENT SPECIFICATION

(11) **EP 2 135 823 B1**
(45) Date of publication and mention of the grant of the patent: **21.03.2012**
(21) Application number: 09007827.0
(22) Date of filing: 15.06.2009
(51) Int. Cl.: B65G 21/06, B65G 37/02

(54) **Modular multi-ring system for flexible supply of workstation**
Modulares System für die flexible Versorgung von Arbeitstationen
Système modulaire pour l'approvisionnement flexible de postes de travail

(30) Priority: 16.06.2008 PT 10410308
(43) Date of publication of application: 23.12.2009
(73) Proprietor: Inesc Porto - Instituto de Engenharia de Sistemas e Computadores do Porto, P-4200-465 Porto (PT)
(72) Inventor: Sousa, José Carlos Caldeira Pinto, 4200-465 Porto (PT); Rebelo, Rui Diogo da Costa Gama Lima, 4200-465 Porto (PT); Ribeiro, Pedro Miguel da Cruz Gandra, 4200-465 Porto (PT); Guedes, Fernando Augusto, 4200-465 Porto (PT); Guardão, Luis Miguel Moreira, 4200-465 Porto (PT); Marques, Paulo Jorge da Rocha e Silva Sá, 4200-465 Porto (PT); Pinho, Manuel de Sousa Resende, 3701-908 Arrifana VFR (PT)
(74) Representative: Magalhaes Simoes, José Raul

(56) References cited:
- EP-A- 0 623 533
- DE-A1- 2 657 795
- DE-A1- 19 504 457
- FR-A- 2 568 861

## Description

### TECHNICAL FIELD OF THE INVENTION

The present invention relates to the domain of movement and distribution automated systems for work support in a manufacturing plant.

The present invention refers to a multi-ring modular system for automated and flexible workstations supply in an environment of continuous production, which allows overtaking between workstations physically arranged in a sequential mode, allowing the simultaneous manufacturing of products with distinct operating ranges within the same section and/or within different sections, without productivity throttling or losses.

This system was specially developed for handling and distribution, in pairs, of products in its manufacturing process in the footwear assembling and finishing sections, which application, however, is possible in other productive sections and to other industrial sectors.

### BACKGROUND OF THE INVENTION

Traditionally, the footwear manufacturing lines are organized in sequential workstations, supported by mechanical conveyors in carrousel provided with continuous movement, with a movement variation, or with a movement with timed stops, which conveyors load and convey, in pairs, said pairs complying with processes identical or similar between themselves, causing them to pass sequentially close to each workstation according to the operative range established and to which the workstation sequence has been previously physically implanted. In this situation, whenever a modification of a model occurs, there is the need of the readjustment of the productive sequence and the resizing of the operators in each workstation as a way to gain productivity and to eliminate throttling, these changes creating the so called wastes of time due to set-up changes.

In the past, and mainly since the 90's, industry in general and particularly the fashion industry, e.g., the footwear industry to which the present invention relates, has been confronted with the changes in the consumers standards, whose level of satisfaction more and more seeks diversified, differentiated or even personalized products, oppositely to the previous existing large series of products made out of identical or similar models available in the market. This situation imposed to companies a need of quick reformulation of their processes as a way to maximize their productive flexibility.

To meet this challenge, suppliers of technologies have incremented the technological level of their conveyors, adding them more levels of transport, from one to four levels, as a way to allow the insertion in simultaneous production, of up to four distinct types of models, and/or also adding to it some other technical functionalities, namely operative functionalities, e.g., reactivation ovens, dryers, humidifiers and coolers, as a way to shorten the productive cycle, therefore reducing the set-up times between models with distinct manufacturing processes.

From this kind of solutions we may point out the commercially designed "Contact" and "Turbo Matic" conveyors of Anzani company (Italy - www.anzanispa.it), which incorporate timed stops and one to four levels of movement, and can optionally incorporate some of the operative systems referred to in the previous paragraph.

However, also those systems are nowadays limitative regarding the companies flexibility, which are faced with the need to incorporate in simultaneous production a much higher diversity of models with distinct manufacturing processes, the prior art having no solution able to provide an answer to these needs or any solution similar to the object of the present invention.

Another gap presently existing in the market and that constitutes a limitation to the present logistics systems, is that their functions are confined to section to section, not allowing the interconnection between distinct manufacturing sections and, therefore, forcing the creation of intermediate stocks between sections, with the inherent disadvantages, costs and losses.

On the domain of internal logistics support to the manufacturing plant a few other systems are already known, although designed for products handling and distribution grouped in manufacturing lots and placed in boxes or containers; however such systems have no similarity to those of the present invention, both in technical and technological terms, or even in its goals. Amongst these systems, and just as a way of example, the following ones can be highlighted:
- PT 073918 and US 6357985 of Anzani, refer to a distributor receiver storage system with automatic programmable control by means of distribution belts by independent workstations.
- US 6230872 of UNITED PARCEL, refers to a method and system for product selection using a matrix in transport cells.

Also the applicants of the present invention are owners of other technologies designed for these areas, namely PT 0509463 and PCT WO 2005/10279 patents, granted to INESC Porto "Distribution and temporary storage system of transport units", as well as other solutions that Lirel currently commercializes, but which are included within the above described ranges of conveyors and that do not resemble to the aim of the present invention.

The patent DE 2657795 A1 also refers to an installation of conveyors, designed to the execution of successive tasks in a series of identical devices, fixed individually or in groups in work piece holders, said installation comprising several workstations and transport devices that successively and step by step pass the objects to the sequential workstations.

This installation is comprises individual modules, which are identical and juxtaposed, each one being equipped with transport devices designed to make the work piece holders, constituted by trays, circulating selectively in a closed circuit on the device itself or to transfer these work piece holders from one device to the next device of the installation.

The present invention according to claim 1 differs from that disclosed in patent DE 2657795 because it has an outer ring and several inner rings provided with a continuous articulated movement, curve modules supporting two systems of transport chains and an interconnection between sections module intended to close the two inner rings and to perform the interconnection between two manufacturing sections.

### BRIEF DESCRIPTION OF THE DRAWINGS

The following detailed description of the present invention is based on the attached drawings without any limitative character. In the drawings:
- Fig. 1 - shows the general configuration of the multi-ring modular system for flexible supplying of workstations;
- Fig. 2 - shows the configuration of a curve module;
- Fig. 3 - shows for the configuration of a straight module;
- Fig. 4 - shows the configuration of an interconnection between sections module;
- Fig. 5 - shows the positioning configuration of a transfer module in the system;
- Fig. 6 - shows the configuration of a transfer module;
- Fig. 7 - shows the configuration of a transport pallet;
- Fig. 8 - shows the configuration of a workstation module;
- Fig. 9 - shows the configuration of a break system;
- Fig. 10 - shows the configuration of an association station module.

### DETAILED DESCRIPTION OF THE INVENTION

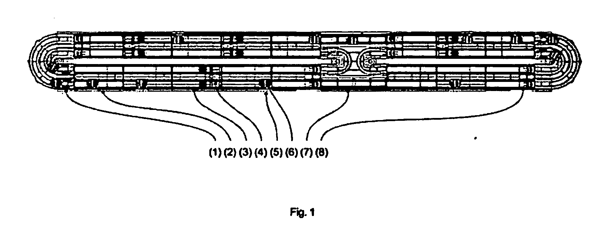

Referring to figure 1, the present invention relates to a system for automated movement and distribution of products in a manufacturing process, in a unitary movement or in pairs, as in the case of footwear, to support the work in a manufacturing plant. The system comprises a modular frame consisting in the interconnection of several rings, one outer ring and several inner rings, with continuous and articulated movement between them, allowing the automated, flexible and continuous supply to the workstations.

The so defined modular frame comprises the combination of several types of modules, namely curve modules (1), which constitute the system ends and which are connected to the straight modules (3 and 8), workstation modules (2), transfer and positioning in the conveyor modules (4), association stations modules (5), transport pallets (6) and interconnection between stations modules (7), all of them duly incorporated and articulated between them, thus constituting the basic frame of the system.

The system also comprises computer supported software and a programmable automated robot ensuring that the whole set performs the automated movement and products distribution in its manufacturing process throughout the workstations allowing movements and supplies between non sequential workstations.

Referring to the drawings, the system operation as well as the function of each one of its modules will be described in detail.

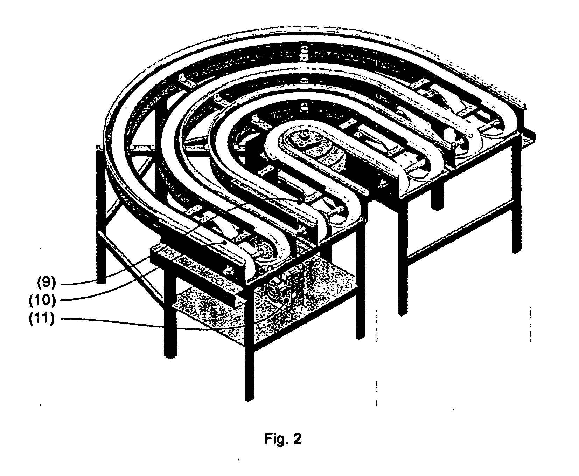

Thus, referring to figure 2, a curve module comprises two systems of transportation chains making a semi circumference of 180 degrees, two chains for the inner ring (9) and another two for the outer ring (10), which, when in rotation, allow a 180 degrees movement inversion of the pallets towards the rotation direction and which movement is ensured by its motor (11).

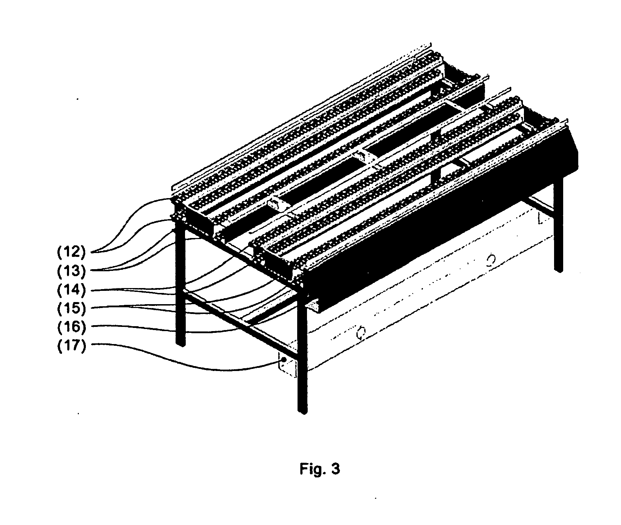

Referring to figure 3, a straight module comprises a support frame to a system of distribution chains of the inner ring (12 and 13) and of the outer ring (14 and 15), which, when in rotation, allows the movement of the pallets in the rotation direction; a rail mounted in the lower part (17) allows the wiring passage to supply the workstations machines, another lateral rail (16) being provided to carry the system control wiring.

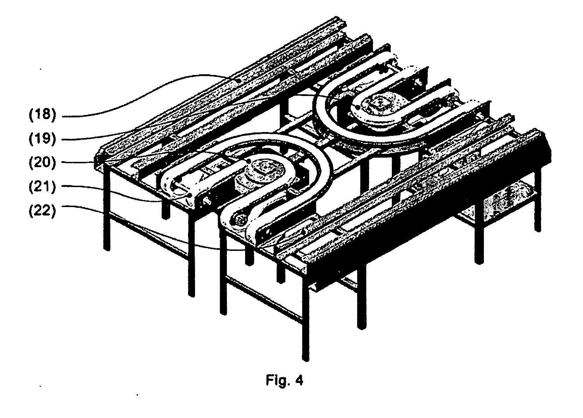

Referring to figure 4, an interconnection module comprises two systems of transportation chains making a semi circumference of 180 degrees closing two inner rings (19, 20 and 21), therefore allowing 180 degrees inversion of the movement of the pallets in the direction of the inner rings. As for the outer rings, this module comprises supports to a chains system (18 and 22), which, when in rotation, allow the movement of pallets in the rotation direction, delivering and receiving pallets between manufacturing sections.

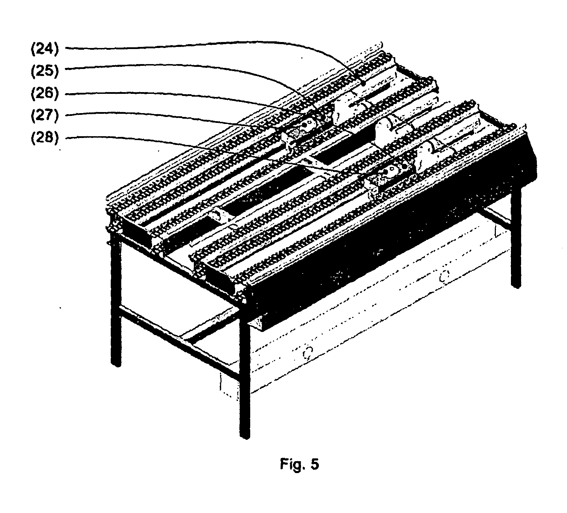

Referring to figure 5, the transfer module (24) is positioned in a frame, placed such as to connect the two chains systems of the outer and inner rings. The positioning of the transfer module is always preceded by two breaks (25 and 26) with RFID readers (27 and 28); these readers make the RFID tag reading in the pallets and after the decision taken by the management system, the corresponding break will free the pallet, which then moves to the transfer module.

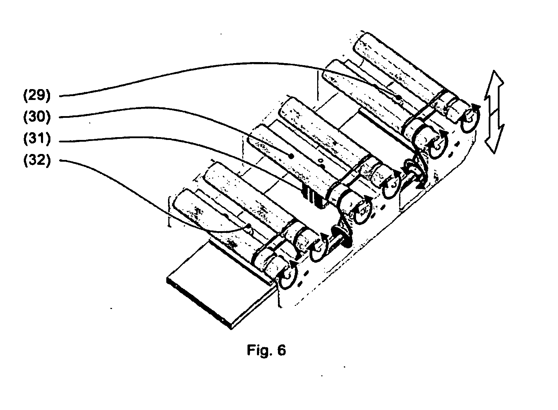

Referring to figure 6, the transfer module has two photocells (29 and 32) that detect the arrival of a pallet; as a result of a system order, the pallet may move forward, without any action from the transfer module. If the pallet is intended to change of ring, the module elevates itself above the level of the transport chains by action of a pneumatic cylinder (31) and the rolls (30) are rotated in the requested movement direction, either to the inner or to the outer side. The photocell (29 or 32) detects the final transverse movement of the pallet and the module lowers below the level of the transport chains, allowing the pallet to move in the longitudinal direction of the conveyor and thus concluding the transfer of the pallet between the outer and the inner rings or vice-versa.

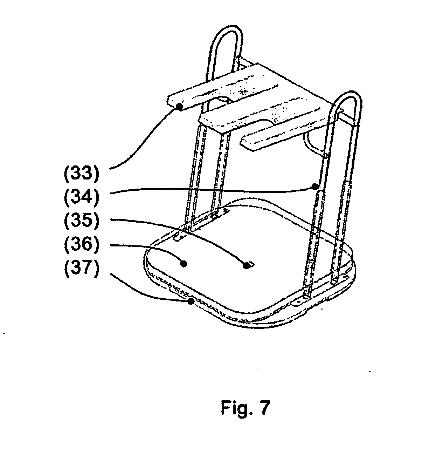

Referring to figure 7, a pallet comprises a bottom (37) in a non-metallic material where a RFID tag (35) is installed. A support (36) is installed on the bottom with small edges in the form of a box where the components being manufactured are placed such as they do not fall with the movement. Two side barriers (34), with a system of height adjustments, comprise a support (33) to place the forms and the vamps of different heights, shoes or knee-high boots in manufacturing process.

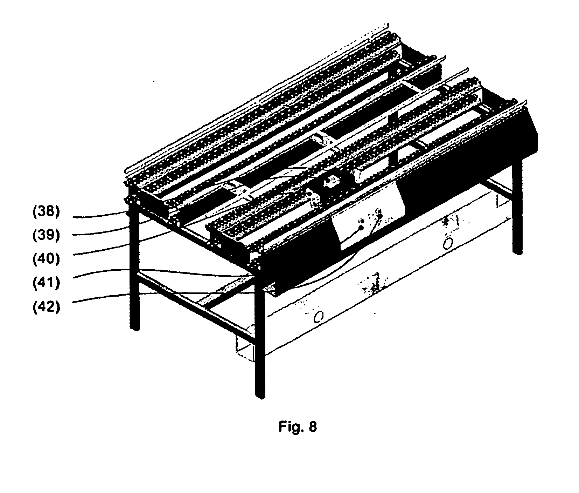

Referring to figure 8, a workstation module comprises a break (40), a photocell (38) and a RFID reader (39). This module is located in the outer ring in the middle of the chains system and can easily be moved along the outer ring in order to adjust to the workstation position. When a pallet arrives to the station break through the chains system it is identified through the reading of the pallet tag or it is automatically identified through a management software system of the system; the workstation module verifies if the next operation in the operative range of the pallet is performed or not in this station. If the next operation is not performed in the same station, it automatically moves forward without the need of the operator intervention. If the next operation is performed in the same station it is retained in the break until the operator presses the end operation button (41) or, by means of system configuration, the pallet can automatically move forward without intervention of the operator after the expected time for performing the operation has elapse. A lamp (42) of intermittent light informs the operator during its operation, if the expected time of operation has been exceeded.

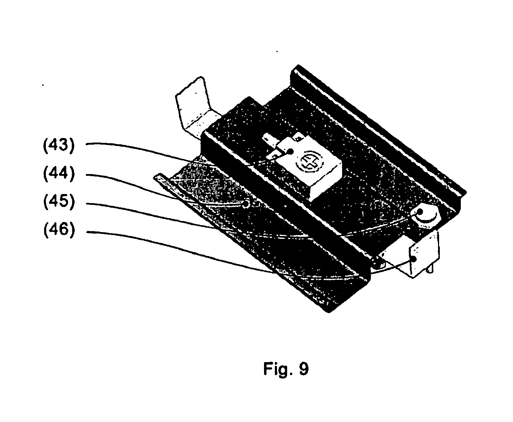

Referring to figure 9, the break module comprises a support (44) allowing it's positioning along the conveyor, a RFID reader (43), a photocell (45) that detects the pallet and a lever (46), which is pneumatically actuated and which holds or frees the pallet.

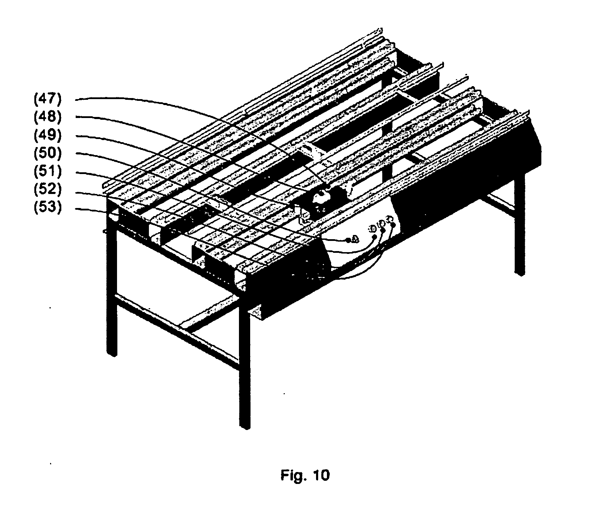

Referring to figure 10, the association station module comprises a break (49) with a cell (47), a RFID reader (48), association buttons (51, 52 and 53), which indicate to the management system what is the operative range to be written on the pallet and a button (50), which allows to place the system both in manual or automatic operation.

A pallet arrives to the association module manually placed by the operator or automatically through the outer ring. The workstations trough which the pallet will pass is defined in the system according to its corresponding operative range, to the existent equipment in each station and to the polyvalence of the operators. The writing in the automation system or in the tag of the information in respect to the manufacturing lot entered in the pallet is made by pressing the corresponding button in the association station either by the operator or by the management computer. In the end of the association, the pallet moves to the next station or to the next transfer, depending on the actual configuration of the movement system. It is also possible to use the system in manual mode in the association station, through a button, that is, an operative range forcing the pallet to move only through the outer ring it is written in the pallet, stopping in every workstation.

After the arrival of a pallet to a station, the automation system verifies through the reading of the tag or through the buffers management system if the next operation of the pallet is or is not performed in the workstation. If the next operation is not performed in the station, the pallet automatically moves to the next step. If the next operation is to be performed in the station, the pallet is held in the break. The operator removes the work out of the pallet and performs the operations predicted for his workstation. After the task is concluded there are two possible ways of indicating the system its ending. The manual way implies that the operator signals the end of the operation to the system by pushing a button or, alternatively, in an automatic way where the system, after the elapsing of the operation predicted time, gives the order to end the operation. The stations are separated from each other in order to allow a stock to be generated between them. After the arrival of the first pallet to the station, the following ones are queued, automatically generating a stock. When the pallet under work moves forward, the first pallet on the stock then turns into the pallet under work in the station. Depending on the configuration of the layout of the logistic system, the pallet will then follow to a station, and the procedure will be the same as previously described, or it will move to a transfer. The pallets may arrive to transfer through the outer ring or through the inner ring. When the pallets arrive through the outer ring the system checks if the next station of the pallet is located between said transfer and the next one. In the affirmative, the pallet is moved through the outer ring to the next station, except in operations such as drying where the pallet is moved to the inner ring. If not, the system verifies the existence of pallets already in movement in the outer ring until the next transfer and, if at least one of the pallets in movement in the outer ring performs an operation in one of the stations, the pallet is moved to the inner ring; if the pallets in movement do not perform operations in the stations, then the pallet is moved through the outer ring. When the pallet arrives to the transfer coming from the inner ring, the system verifies if the next step is located between the referred transfer and the next transfer. In the affirmative, the pallet is moved to the outer ring provided there is a place at its destination station; otherwise, it remains on hold in the transfer break until it has got an empty place at its destination. If not, the pallet remains on the inner ring.

After the end of all of the operations in the contiguous stations to the inner ring, the pallets are moved from the outer ring to the inner ring in order to use the inner ring as an intermediate stock between the manufacturing sectors. A specific algorithm to each of the manufacturing sectors groups the pallets according to some criteria, namely the color, the priority and the manufacturing order to optimize the production in the following sector.

At the end of all the operations, the empty pallet is moved directly to the association station, thus restarting all the process or, in case the association station is full, the pallet is moved to the inner ring to be stored.

Besides the embodiment showed in figure 1, there are several other possible embodiments depending on the number or workstations and manufacturing routes.

## Claims

1. Multi-ring modular system for flexible supplying of workstations **characterized by** a modular basis construction comprising curve modules (1), workstation modules (2), straight modules (3 and 8), transfer modules (4), association station modules (5), pallets (6), interconnection between sections modules (7) interconnected between them, **the modules being coupled to each other**, and which **system** originates a ring form frame, **comprising** an outer ring and several inner rings provided with a continuous articulated movement between them,
**wherein** the curve modules (1) **constitute the system ends and are connected to the straight modules (3 and 8) and** comprises a semicircular frame supporting two systems of transport chains, two chains for the outer ring and two chains for the inner ring allowing the movement of the pallets (6) to the outer ring or to the inner rings,
**and wherein the** interconnection between sections modules (7) are intended to close two inner rings and to perform the interconnection between two manufacturing sections, the inner rings **of the interconnection between sections modules (7)** comprising two systems of transport chains placed in a semi circumference, closing two rings and allowing to invert the movement of the pallets in the chains rotation direction, and in that the outer ring **of the interconnection between sections modules (7)** also has a chains system, which, when in rotation, moves the pallets **(6)** in the rotation direction, moving and receiving them in between the manufacturing sections.

2. Multi-ring modular system for flexible supplying of workstations according to claim 1, **characterized in that** the ring form frame resulting from the conjugation of the several modules allows the movement of the pallets (6) along the rings, supplying sequential or non sequential workstations, allowing overtaking between them and supplying each station in a continuous and automated way.

3. Multi-ring modular system for flexible supplying of workstations according to claim 1, **characterized in that** the straight modules (3 and 8) comprise a frame supporting the transport chains, supporting the transfer modules (4) and supporting the workstation modules (2), allowing to move the pallets (6) in between sequential or non sequential workstations, to size the quantities of each workstation and to define the organization of the conveyor.

4. Multi-ring modular system for flexible supplying of workstations according to claims 1 and 3, **characterized in that** the connection between the outer ring and the inner rings is performed by positioning the transfer modules (4) in a frame, which connects the two chain systems of the outer and inner rings, the transfer module being always preceded by two breaks with readers that identify the pallet (6) and, after the decision taken by the management system, the corresponding break releases the pallet, which moves to the transfer module.

5. Multi-ring modular system for flexible supplying of workstations according to claims 1, 3 and 4, **characterized in that** the transfer module (4) comprises a system of rolls having two photocells that detect the arrival of each pallet (6) and, by order of the system, moves on to the next station or, if it has to change from ring, the module rises itself above the level of the transporting chains by action of a pneumatic system moving the pallets into the inner or outer ring and, when the photocell detects the end of the movement of the pallet, the module then lowers below the level of the conveyor chains allowing the pallet to continue its transfer between rings.

6. Multi-ring modular system for flexible supplying of workstations according to claim 1, **characterized in that** the pallets (6) comprise a sensor incorporated in the bottom frame allowing the system to identify the position of each pallet and to define its route on to the next workstation, available in any point of the ring.

7. Multi-ring modular system for flexible supplying of workstations according to claims 1 and 3, **characterized in that** the workstation module (2) comprises a break system that detects and stops the pallets in the workstation, a panel with a button to warn the end of the operation and a luminous warning signal for exceeded time, this module being positioned in the outer ring in the middle of the chains system and easily moved along the ring, adjusting to the position of the physical workstation of the operator.

8. Multi-ring modular system for flexible supplying of workstations according to claims 1 and 3, **characterized in that** the straight module (3 and 8) comprises a break system constituted by a support that may be applied in any point of the straight section of the conveyor, a lever of pneumatically actuation allowing to fix the pallet, a sensor that detects the pallet and, optionally, a reader allowing to identify the pallet.

9. Multi-ring modular system for flexible supplying of workstations according to claim 1, **characterized in that** the association station module (5) comprises a device allowing to identify the pallet, a break system allowing to stop the pallet in the workstation and also a panel with buttons previously configured within the operative range that establishes the manufacturing route to be followed.

10. Multi-ring modular system for flexible supplying of workstations according to claims 1 and 9, **characterized in that** it comprises association locations, which constitute locations where a set of materials is associated to a transport unit so that this set is recognized and treated by the system until all the operations to be performed in the workstations are accomplished.

11. Multi-ring modular system for flexible supplying of workstations according to claim 1, **characterized in that** it comprises a computer software and/or a programmable automated robot responsible to manage, monitor, spread and balance the system, taking into account the information of the work to be performed in each pallet of each designated operative range, the predicted times for each operation, the quantity and identification of the model, said information being obtained in the operation of association the pallet to its content.

## Patentansprüche

1. Modulares Multiringsystem zur flexiblen Versorgung von Arbeitsstationen, **gekennzeichnet durch** eine modulare Grundkonstruktion, die Kurvenmodule (1), gerade Module (3 und 8), Transfermodule (4), Zuweisungsstation-Module (5), Paletten (6) und Module zum Verbinden von Sektionen (7) umfasst, die miteinander verbunden sind, wobei die Module aneinander gekoppelt werden und wobei das System eine ringförmige Struktur bildet, welche einen äusseren und mehrere innere Ringe umfasst, die sich in einer kontinuierlichen untereinander **durch** Gelenke verbundenen Bewegung befinden,
in welchem die Kurvenmodule (1) die Enden des Systems bilden und mit den geraden Modulen (3 und 8) verbunden sind, und das eine halbkreisförmige Struktur umfasst, die zwei Transportkettensysteme, zwei Ketten für den äusseren Ring und zwei Ketten für den inneren Ring trägt, welche die Bewegung der Paletten (6) zum äusseren Ring oder zu den inneren Ringen erlauben,
und in welchem die Module zum Verbinden von Sektionen (7) dazu bestimmt sind, zwei innere Ringe zu schliessen und die Verbindung zwischen zwei Fertigungssektionen herzustellen, in dem die inneren Ringe der Module zum Verbinden von Sektionen (7) zwei halbkreisförmig angeordnete Transportkettensysteme umfassen, wobei sie die zwei Ringe schliessen und die Umkehrung der Bewegung der Paletten in Rotationsrichtung der Ketten gestatten, und in welchem der äussere Ring der Module zum Verbinden von Sektionen (7) ebenfalls ein Kettensystem besitzt, welches, wenn es sich in Rotation befindet, die Paletten (6) in Rotationsrichtung bewegt, wobei es sie zwischen den Fertigungssektionen transportiert und annimmt.

2. Modulares Multiringsystem zur flexiblen Versorgung von Arbeitsstationen nach Anspruch 1, **dadurch gekennzeichnet, dass** die durch die Verbindung der verschiedenen Module resultierende Ringstruktur die Bewegung der Paletten (6) entlang der Ringe gestattet und dabei aufeinanderfolgende oder nicht aufeinanderfolgende Arbeitsstationen versorgt, wobei sie zwischen ihnen Überholvorgänge gestattet und jede Arbeitsstation kontinuierlich und automatisch versorgt.

3. Modulares Multiringsystem zur flexiblen Versorgung von Arbeitsstationen nach Anspruch 1, **dadurch gekennzeichnet, dass** die geraden Module (3 und 8) eine die Transportketten tragende Struktur umfasst, die die Transfermodule (4) und die Arbeitsstationsmodule (2) trägt, wobei sie die Bewegung der Paletten (6) zwischen aufeinanderfolgenden oder nicht aufeinanderfolgenden Arbeitsstationen gestattet, um die Mengen jeder Arbeitsstation zu bemessen und die Organisation des Transportsystems zu bestimmen.

4. Modulares Multiringsystem zur flexiblen Versorgung von Arbeitsstationen nach den Ansprüchen 1 und 3, **dadurch gekennzeichnet, dass** die Verbindung zwischen dem äusseren Ring und den inneren Ringen **dadurch** hergestellt wird, dass es die Transfermodule (4) in einer Struktur positioniert, die die beiden Kettensysteme des äusseren Rings und der inneren Ringe verbindet, wobei sich vor dem Transfermodul immer zwei Stopper mit Lesegeräten befinden, die die Palette (6) identifizieren und der entsprechende Stopper, nachdem durch das Steuerungssystem eine Entscheidung getroffen wurde, die Palette freigibt, die dann zum Transfermodul weitergeleitet wird.

5. Modulares Multiringsystem zur flexiblen Versorgung von Arbeitsstationen nach den Ansprüchen 1, 3 und 4, **dadurch gekennzeichnet, dass** das Transfermodul (4) ein Rollensystem mit zwei Fotozellen umfasst, die die Ankunft jeder Palette (6) erkennen und dass diese auf Anweisung des Systems zur nächsten Arbeitsstation weiterfährt oder, wenn sie den Ring wechseln muss, das Modul sich mit Hilfe eines Pneumatiksystems, welches die Paletten zum inneren oder äusseren Ring bewegt, über das Niveau der Transportketten erhebt und, wenn die Fotozelle das Ende der Palettenbewegung feststellt, das Modul sich dann unter das Niveau der Transportketten senkt und so der Palette gestattet, seinen Transfer zwischen den Ringen fortzusetzen.

6. Modulares Multiringsystem zur flexiblen Versorgung von Arbeitsstationen nach Anspruch 1, **dadurch gekennzeichnet, dass** die Paletten (6) einen in die Basisstruktur integrierten Sensor umfassen, der es gestattet, dass das System die Positionierung jeder Palette identifiziert und ihre Weiterleitung zur folgenden an irgendeiner Stelle des Rings befindlichen Arbeitsstation bestimmt.

7. Modulares Multiringsystem zur flexiblen Versorgung von Arbeitsstationen nach den Ansprüchen 1 und 3, **dadurch gekennzeichnet, dass** das Arbeitsstationsmodul (2) ein Stoppersystem, das die Paletten erkennt und sie an der Arbeitsstation anhält, eine Schalttafel mit einem Knopf zum Melden der Beendigung der Operation und ein Lichtsignal zur Meldung einer Zeitüberschreitung umfasst, und dass dieses Modul auf dem äusseren Ring in das Kettensystem gesetzt wird und leicht entlang dem Ring bewegt werden kann, wobei es sich der Position des physischen Arbeitsplatzes der Bedienungsperson anpasst.

8. Modulares Multiringsystem zur flexiblen Versorgung von Arbeitsstationen nach den Ansprüchen 1 und 3, **dadurch gekennzeichnet, dass** die geraden Module (3 und 8) ein Stoppersystem umfassen, bestehend aus einem Träger, der an jeder Stelle der geraden Sektion des Transportsystems verwendet werden kann, einem pneumatisch angetriebenen Hebel, der es gestattet, die Palette festzuhalten, einem Sensor, der die Palette erkennt und, falls gewünscht, ein Lesegerät, das die Identifizierung der Palette erlaubt.

9. Modulares Multiringsystem zur flexiblen Versorgung von Arbeitsstationen nach Anspruch 1, **dadurch gekennzeichnet, dass** das Zuweisungsstation-Modul (5) eine Vorrichtung umfasst, die die Identifizierung der Palette erlaubt, ein Stoppersystem, das es gestattet, die Palette an der Arbeitsstation anzuhalten und ebenfalls eine Schalttafel mit Knöpfen, die vorher gemäß der durch den einzuhaltenden Herstellungsgang festgelegten Arbeitsschritte konfiguriert wurden.

10. Modulares Multiringsystem zur flexiblen Versorgung von Arbeitsstationen nach den Ansprüchen 1 und 9, **dadurch gekennzeichnet, dass** es Zuweisungsstellen umfasst, was Stellen sind, wo ein Materiallos einer Transporteinheit zugewiesen wird, damit das Ganze zusammen vom System bis zu dem Moment, wenn alle an den Arbeitsstationen auszuführenden Arbeitsschritte abgeschlossen sind, erkannt und verarbeitet wird.

11. Modulares Multiringsystem zur flexiblen Versorgung von Arbeitsstationen nach Anspruch 1, **dadurch gekennzeichnet, dass** es ein Programm auf Basis eines Computers oder eines programmierbaren Automaten umfasst, welches dafür verantwortlich ist, das System zu steuern, zu überwachen, einzuteilen und auszubalancieren, wobei es die Information für die an jeder Palette in jedem Arbeitsschritt auszuführende Arbeit, die für die Operation vorgesehenen Zeiten, die Menge und Identifizierung des Modells berücksichtigt, wobei diese Information bei dem Arbeitsschritt der Zuweisung der Palette zu ihrem Inhalt erhalten wird.

## Revendications

1. Système modulaire multi-anneau pour l'approvisionnement flexible de postes de travail **caractérisé par** une construction de base modulaire comprenant des modules courbes (1), modules droite (3 et 8), modules de transfert (4), modules de poste d'association (5), palettes (6), modules d'interconnexion entre sections (7) interconnectés entre eux, les modules étant couplés les uns aux autres, et dont le système origine une structure en forme d'anneau, comprenant un anneau extérieur et plusieurs anneaux intérieures, dotés d'un mouvement continu articulé entre eux,
où les modules courbes (1) constituent les extrémités du système et sont connectés aux modules droite (3 et 8) et comprend une structure semi-circulaire qui supporte deux systèmes de chaînes de transport, deux chaînes pour l'anneau extérieur et deux chaînes pour l'anneau intérieur, qui permettent le mouvement des palettes (6) vers l'anneau extérieur ou vers les anneaux intérieurs,
et où les modules d'interconnexion entre sections (7) sont destinés à fermer deux anneaux intérieurs et à faire l'interconnexion entre deux sections de fabrication, où les anneaux intérieures des modules d'interconnexion entre sections (7) comprennent deux systèmes de chaînes de transport disposées sur une semi-circonférence, fermant les deux anneaux et permettant inverser le mouvement des palettes dans le sens de la rotation des chaînes, et où l'anneau extérieur des modules d'interconnexion entre sections (7) possède aussi un système de chaînes lequel, lors de la rotation, mouvemente les palettes (6) dans le sens de la rotation, les déplaçant et les recevant entre les sections de fabrication.

2. Système modulaire multi-anneau pour l'approvisionnement flexible de postes de travail selon la revendication 1, **caractérisé en ce que** la structure en anneau résultante de la combinaison des différents modules permet le mouvement des palettes (6) le long des anneaux, approvisionnant postes de travail séquentiels ou non séquentiels, permettant dépassements entre eux et approvisionnant en continu et de manière automatisée chacun des postes.

3. Système modulaire multi-anneau pour l'approvisionnement flexible de postes de travail selon la revendication 1, **caractérisé en ce que** les modules droite (3 et 8) comprennent une structure supportant les chaînes de transport, supportant les modules de transfert (4) et supportant les modules de postes de travail (2), permettant le mouvement des palettes (6) entre postes de travail, séquentiels ou non séquentiels, pour dimensionner les quantités de chaque poste de travail et pour définir l'organisation du transporteur.

4. Système modulaire multi-anneau pour l'approvisionnement flexible de postes de travail selon les revendications 1 et 3, **caractérisé en ce que** la liaison entre l'anneau extérieure et les anneaux intérieures est faite en positionnant les modules de transfert (4) sur une structure qui relie les deux systèmes de chaînes de l'anneau extérieure et des anneaux intérieures, le module de transfert étant toujours précédée par deux freins pourvus par des lecteurs qui identifient la palette (6) et, après prise de décision par le système de gestion, le frein correspondent libère la palette, celle-ci poursuivant vers le module de transfert.

5. Système modulaire multi-anneau pour l'approvisionnement flexible de postes de travail selon les revendications 1, 3 et 4, **caractérisé en ce que** le module de transfert (4) comprend un système de rouleaux possédant deux photocellules qui détectent l'arrivée de chaque palette (6 ) et par ordre du système, celle-ci suit vers le poste suivant ou, si besoin de changer d'anneau, le module monte au-dessus du niveau des chaînes de transport par l'action d'un système pneumatique mouvementant les palettes vers l'anneau intérieure ou extérieur et quand la photocellule détecte la fin du mouvement de la palette, le module descend alors en dessous du niveau des chaînes de transport permettant la palette de continuer son transfert entre anneaux.

6. Système modulaire multi-anneau pour l'approvisionnement flexible de postes de travail selon la revendication 1, **caractérisé en ce que** les palettes (6) comportent un capteur intégré sur la structure de base permettant au système d'identifier la position de chaque palette et de définir son acheminement vers le poste de travail suivant, disposé à tout point de l'anneau.

7. Système modulaire multi-anneau pour l'approvisionnement flexible de postes de travail selon les revendications 1 et 3, **caractérisé en ce que** le module de poste de travail (2) comprend un système de freinage qui détecte et fait arrêter les palettes sur le poste de travail, un panneau pourvu d'un bouton pour avertissement de fin d'opération et un signal lumineux d'avertissement d'excès de temps, ce module étant positionné sur l'anneau extérieure au milieu du système de chaînes et qui peut être facilement mouvementé au long de l'anneau, s'ajustant à la position du poste de travail physique de l'opérateur.

8. Système modulaire multi-anneau pour l'approvisionnement flexible de postes de travail selon les revendications 1 et 3, **caractérisé en ce que** les modules droites (3 et 8) comprennent un système de freinage constitué par un support qui peut être appliqué sur n'importe quel point de la section droite du transporteur, un levier d'actionnement pneumatique qui permet de fixer la palette, un capteur qui détecte la palette et, optionnellement, un lecteur qui permet d'identifier la palette.

9. Système modulaire multi-anneau pour l'approvisionnement flexible de postes de travail selon la revendication 1, **caractérisé en ce que** le module de poste d'association (5) comprend un dispositif qui permet d'identifier la palette, un système de freinage qui permet d'arrêter la palette sur le poste de travail et aussi un panneau avec des boutons préconfigurés dans la gamme d'opération qui établit le cours de fabrication à suivre.

10. Système modulaire multi-anneau pour l'approvisionnement flexible de postes de travail selon les revendications 1 et 9, **caractérisé en ce qu'**il comprend des endroits d'association, qui constituent des endroits où un lot de matériels est associé à une unité de transport, pour que cet ensemble soit reconnu et géré par le système jusqu'au moment **en ce que** toutes les opérations à effectuer sur les postes de travail soient terminées.

11. Système modulaire multi-anneau pour l'approvisionnement flexible de postes de travail selon la revendication 1, **caractérisé en ce qu'**il comprend un programme basé sur ordinateur et / ou automate programmable responsable pour gérer, surveiller, échelonner et équilibrer le système, en tenant compte l'information du travail à effectuer sur chaque palette de chaque gamme d'opération, temps d'opération prévus, la quantité et identification du modèle, cette information étant obtenue dans l'opération d'association de la palette à son contenu.
